(19) **Europäisches Patentamt / European Patent Office / Office européen des brevets**

(11) **EP 3 588 962 A1**

(12) **EUROPEAN PATENT APPLICATION**

(43) Date of publication:
**01.01.2020  Bulletin 2020/01**

(51) Int Cl.:
**H04N 19/593** (2014.01)  **H04N 19/186** (2014.01)

(21) Application number: **19182846.6**

(22) Date of filing: **27.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2018  US 201862691729 P
06.09.2018  US 201862727595 P
19.06.2019  TW 108121169
19.06.2019  US 201916446174**

(71) Applicant: **Industrial Technology Research Institute
Hsinchu 31040 Taiwan (TW)**

(72) Inventors:
• **WANG, Sheng-Po**
  **320 Taoyuan City (TW)**
• **LIN, Chun-Lung**
  **114 Taipei City (TW)**
• **LIN, Ching-Chieh**
  **105 Taipei City (TW)**
• **YAU, Chang-Hao**
  **248 New Taipei City (TW)**
• **LIN, Po-Han**
  **112 Taipei City (TW)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **VIDEO DECODING METHOD, VIDEO DECODER, VIDEO ENCODING METHOD AND VIDEO ENCODER**

(57)    A video decoding method includes: receiving a coding value; and performing the following steps according to an index value of the coding value: collecting a plurality of reference samples, grouping the plurality of reference samples to generate at least one group, establishing a model of the at least one group, obtaining a target pixel from a target block, selecting a target group from the at least one group, and introducing a luminance value of the target pixel into a model of the target group to predict a chromaticity value of the target pixel.

Start

| Receive coding value, and perform following steps according to index value of coding value | ~105 |

| Collect plurality of reference samples | ~110 |

| Group reference samples to generate at least one group | ~120 |

| Establish model of at least one group | ~130 |

| Obtain target pixel from target block | ~140 |

| Select target group from at least one group according to target pixel | ~150 |

| Introduce luminance value of target pixel into model of target group to predict chromaticity value of target pixel | ~160 |

End

**FIG. 1**

EP 3 588 962 A1

**Description**

TECHNICAL FIELD

The disclosure relates to a video decoding method, a video decoder, a video encoding method and a video encoder.

BACKGROUND

To enhance coding efficiency of video data, in international video coding standards, such as H.264/Advanced Video Coding (AVC), intra prediction is introduced to remove spatial information redundancy of a current coding image block and neighboring coded image blocks.

When video data in a coding format of YCbCr is coded, if the amount of coding data is further reduced, encoding/decoding efficiency can be enhanced.

SUMMARY

According to an exemplary embodiment of the disclosure, a video decoding method is provided, the method including: receiving a coding value; and performing the following steps according to an index value of the coding value: collecting a plurality of reference samples, grouping the reference samples to generate at least one group, establishing a model of the at least one group, obtaining a target pixel from a target block, selecting a target group from the at least one group according to the target pixel, and introducing a luminance value of the target pixel into a model of the target group to predict a chromaticity value of the target pixel.

According to an exemplary embodiment of the disclosure, a video encoding method is provided, the method including: collecting a plurality of reference samples, grouping the reference samples to generate at least one group, establishing a model of the at least one group, obtaining a target pixel from a target block, selecting a target group from the at least one group according to the target pixel, introducing a luminance value of the target pixel into a model of the target group to predict a chromaticity value of the target pixel, and generating a coding value, the coding value including an index value.

According to an exemplary embodiment of the disclosure, a video decoder is provided, the decoder including: a processor, for controlling the video decoder; a memory, for storing a plurality of reference samples and a target block; a decoding module; and an index receiving module, receiving a coding value. The processor, the memory, the decoding module and the index receiving module are coupled to one another. The decoding module performs the following steps according to an index value of the coding value: collecting a plurality of reference samples, grouping the reference samples to generate at least one group, establishing a model of the at least one group, obtaining a target pixel from a target block, selecting a target group from the at least one group according to the target pixel, and introducing a luminance value of the target pixel into a model of the target group to predict a chromaticity value of the target pixel.

According to an exemplary embodiment of the disclosure, a video encoder is provided, the encoder including: a processor, for controlling the video encoder; a memory, for storing a plurality of reference samples and a target block; an encoding module; and an index selecting module. The processor, the memory, the encoding module and the index selecting module are coupled to one another. The encoding module performs the following operations: collecting the reference samples, grouping the reference samples to generate at least one group, establishing a model of the at least one group, obtaining a target pixel from the target block, introducing a luminance value of the target pixel into a model of the target group to predict a chromaticity value of the target pixel, and generating a coding value. The index selecting module generates an index value from the coding value generated by the encoding module.

BRIEF DESCRIPTION OF THE DRAWINGS

FIG. 1 is a flowchart of a video decoding method according to an exemplary embodiment of the disclosure;

FIG. 2A to FIG. 2C are reference blocks according to an exemplary embodiment of the disclosure;

FIG. 3 is a schematic diagram of grouping according to an exemplary embodiment of the disclosure;

FIG. 4 is a schematic diagram of grouping according to an exemplary embodiment of the disclosure;

FIG. 5 is a schematic diagram of grouping according to an exemplary embodiment of the disclosure;

FIG. 6 is a schematic diagram of segmentation according to an exemplary embodiment of the disclosure;

FIG. 7 is a schematic diagram of another type of segmentation according to an exemplary embodiment of the disclosure;

FIG. 8 is a schematic diagram of establishing a linear model according to an exemplary embodiment of the disclosure;

FIG. 9A to FIG. 9C are schematic diagrams of establishing a linear model according to an exemplary embodiment of the disclosure;

FIG. 10 is a schematic diagram of establishing a linear model according to an exemplary embodiment of the disclosure;

FIG. 11 is a schematic diagram of prediction of a chromaticity value according to an exemplary embodiment of the disclosure;

FIG. 12 is a schematic diagram of prediction of a chromaticity value according to an exemplary embodiment of the disclosure, wherein the target pixel is regarded as an out-lier;

FIG. 13 is a flowchart of a video encoding method according to an exemplary embodiment of the disclosure;

FIG. 14 is a function block diagram of a video decoder according to an exemplary embodiment of the disclosure; and

FIG. 15 is a function block diagram of a video encoder according to an exemplary embodiment of the disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION

Technical terms of the application are based on general definition in the technical field of the application. If the application describes or explains one or some terms, definition of the terms are based on the description or explanation of the application. Each of the disclosed embodiments has one or more technical features. In possible implementation, one skilled person in the art would selectively implement part or all technical features of any embodiment of the application or selectively combine part or all technical features of the embodiments of the application based on the disclosure of the application and his/her own need.

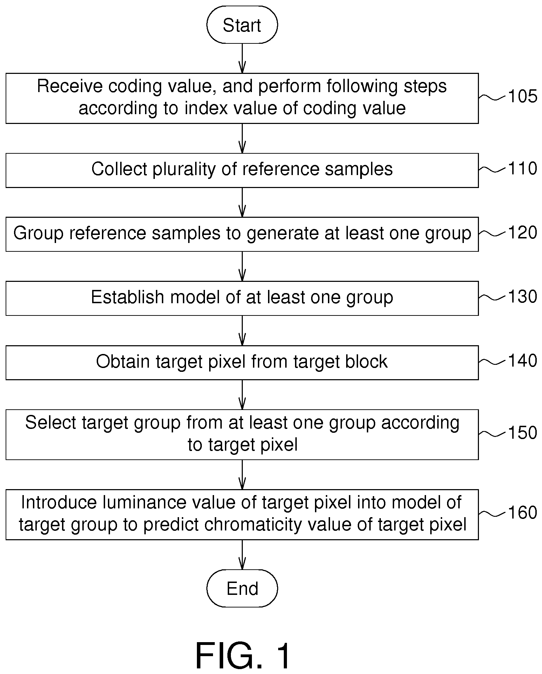

FIG. 1 shows a flowchart of a video decoding method according to an exemplary embodiment of the disclosure. As shown in FIG. 1, in step 105, a coding value is received. The following steps are performed according to an index value of the coding value. In step 110, a plurality of reference samples are collected. In step 120, the reference samples are grouped to generate at least one group, wherein the quantity of groups generated is one or any number more than two. In step 130, a model of the at least one group is established (for example but not limited to, a correlation model). In step 140, a target pixel is obtained (or selected) from a target block. In step 150, a target group is selected from the at least one group according to the target pixel. In step 160, a luminance value of the target pixel is introduced into a model of the target group to predict a chromaticity value of the target pixel.

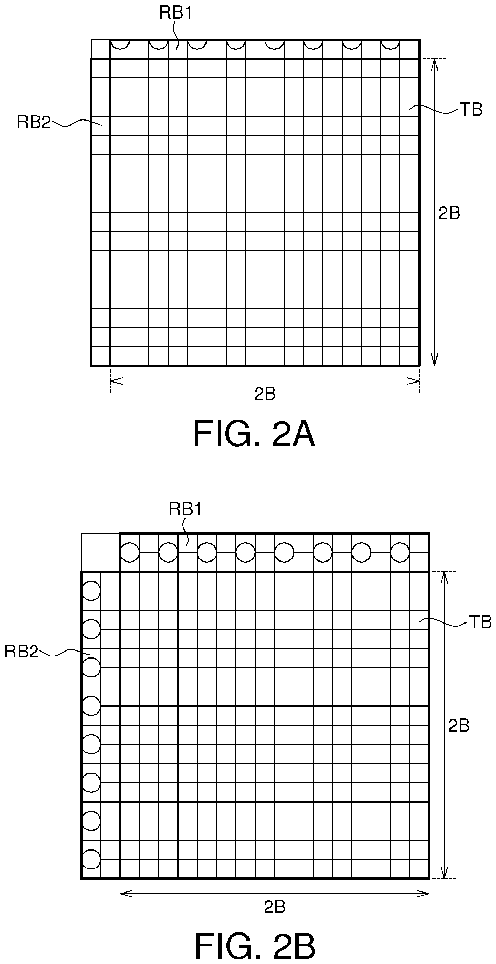

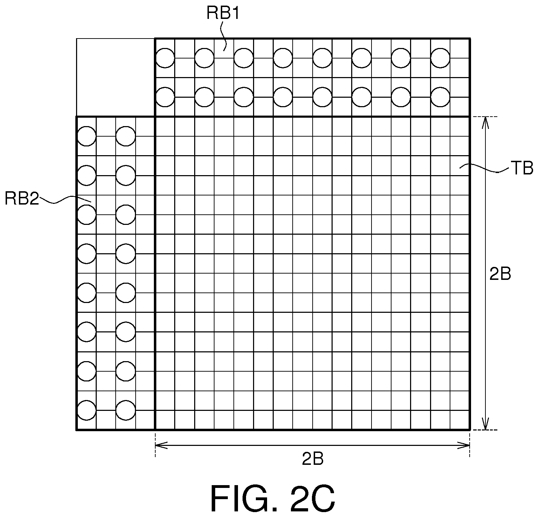

FIG. 2A to FIG. 2C show reference blocks according to an exemplary embodiment of the disclosure. As shown in FIG. 2A, each of reference blocks RB1 and RB2 is taken from one pixel line adjacent to a target block TB, wherein the reference block RB1 is obtained from an upper block adjacent to the target block TB and the reference block RB2 is obtained from a left block adjacent to the target block RB; that is, the reference samples are collected from the upper adjacent block and the left adjacent block of the target block. The target block TB includes 2B*2B pixels (where B is a positive integer). As shown in FIG. 2B, the reference blocks RB1 and RB2 are taken from two pixel lines adjacent to the target block TB. As shown in FIG. 2C, the reference blocks RB1 and RB2 are taken from four pixels lines adjacent to the target block TB.

The target block TB refers to a block to be reconstructed, wherein a luminance value of the target block TB is known. In an exemplary embodiment of the disclosure, a chromaticity value of a target pixel of the target block TB can be predicted from a luminance value of the target pixel of the target block TB. After individual chromaticity values of all of the target pixels in the target block TB have been predicted, the target block TB is considered as having been reconstructed. In the description below, a linear model is taken as an example for illustration; however, the present application is not limited thereto.

In step 110, the reference samples are scanned to obtain a plurality of luminance values and a plurality of chromaticity values of the reference samples.

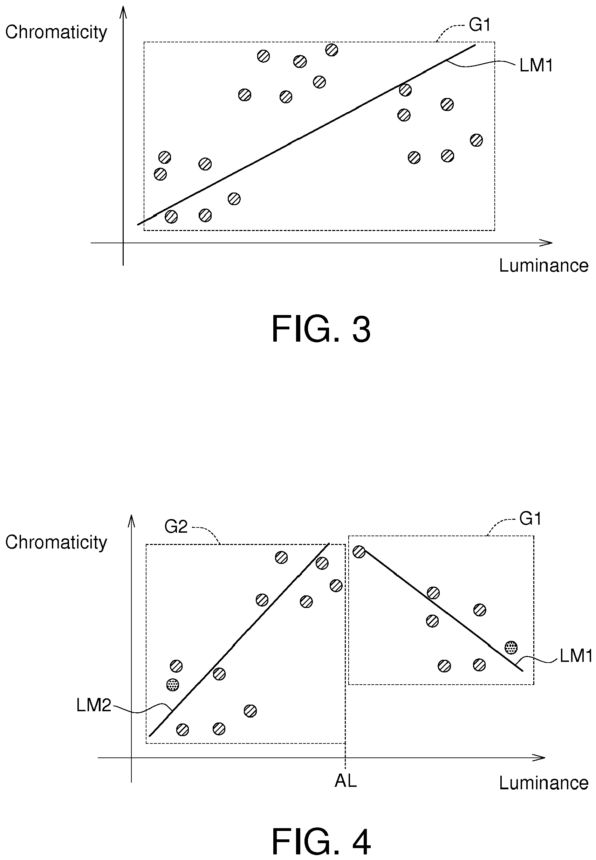

Principles for the grouping in step 120 are described herein. FIG. 3 shows a schematic diagram of grouping according to an exemplary embodiment of the disclosure. As shown in FIG. 3, all reference samples (the dots in FIG. 3 are the reference samples) are grouped into one single group G1, and a linear model LM1 is established for the group G1. Then, the luminance value of each target pixel is introduced into the linear model LM1 to predict the chromaticity value of each target pixel.

FIG. 4 shows a schematic diagram of grouping according to an exemplary embodiment of the disclosure. As shown in FIG. 4, an average luminance value AL of all of the reference samples is calculated. All of the reference samples are grouped into two groups G1 and G2 according to the average luminance value AL, wherein a reference sample having a luminance value greater than the average luminance value AL is grouped into the group G1, and a reference sample having a luminance value smaller than the average luminance value AL is grouped into the group G2. Linear models LM1 and LM2 are respectively generated for the groups G1 and G2. The group nearer to the target pixel is identified, so as to predict the chromaticity value of the target pixel by using the linear model of that group. If the luminance value of the target pixel is greater than the average luminance value AL, the group G1 is considered as being nearer to the target group, and the chromaticity value of the target pixel is predicted by using the linear model LM1 of the group G1. Conversely, if the luminance value of the target pixel is smaller than the average luminance value AL, the group G2 is considered as being nearer to the target pixel, and the chromaticity value of the target pixel is predicted by using the linear model LM2 of the group G2.

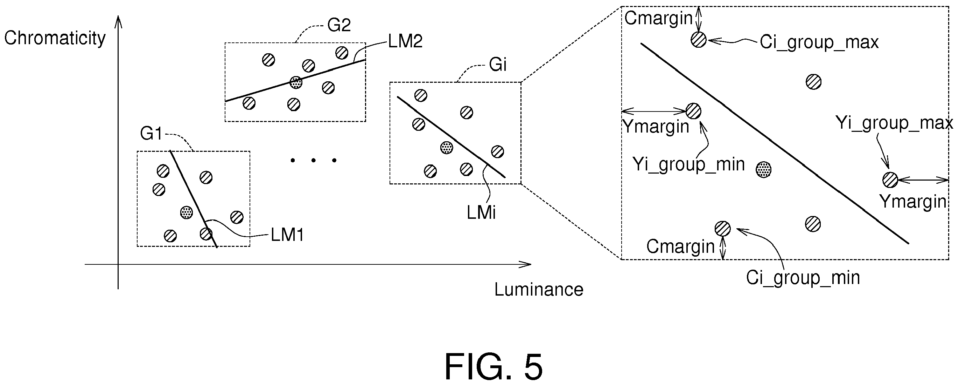

FIG. 5 shows a schematic diagram of grouping according to an exemplary embodiment of the disclosure. Reference samples are scanned, and it is determined whether each of the reference samples belongs to any one existing group of the groups. The step of grouping the reference samples includes: establishing a first group according to a first reference sample of the reference samples, and assigning the first reference sample to the first group; determining whether to add a second reference sample of the reference samples into the first group according to a sample characteristic value of the second reference sample; if it is determined to add the second reference sample into the second group, updating a group characteristic value of the first group; and if it determined not to add the second reference sample into the second group, establishing a second group and calculating a group characteristic value of the second group. The group characteristic value includes any combination of: a position, a representative luminance value, a representative chromaticity component value, a maximum luminance, a minimum luminance, a maximum chromaticity, a minimum chromaticity, and a reference sample quantity. The sample characteristic value includes any combination of: a luminance, at least one chromaticity component, and a position. The details of the above are described in the following examples.

For example, details of determining whether to add a second reference sample of the reference samples into the first group according to a sample characteristic value of the second reference sample can be as described below. Two embodiments are given below; that is, two sets of determination equations, and given that it is determined that one or all reference samples Rn (where n is a positive integer) satisfy any set of the determination equations, it can be determined to add the reference sample Rn (where n is a positive integer) into the group.

The first set of determination equations are: determining whether a luminance value YRn and a chromaticity value CRn of the reference sample Rn (where n is a positive integer) satisfy the following equations to determine whether the reference sample Rn belongs to the group Gi (where i=1 to A, and A represents the quantity of existing groups) (if all of the four equations below are satisfied, it is determined that the reference sample Rn belongs to the group Gi; that is, if any one of the equations is not satisfied, it is determined that the reference sample Rn does not belong to the group Gi): $YRn > Yi\_group\_min - Ymargin$; $YRn < Yi\_group\_max + Ymargin$; $CRn > Ci\_group\_min - Cmargin$; and $CRn < Ci\_group\_max + Cmargin$.

In the above, Yi_group_min represents a minimum luminance value in the group Gi, Ymargin and Cmargin respectively represent a luminance range threshold (which may be an existing constant value) and a chromaticity range threshold (which may be an existing constant value), Yi_group_max represents a maximum luminance value in the group Gi, Ci_group_min represents a minimum chromaticity value in the group Gi, and Ci_group_max represents a maximum chromaticity value in the group Gi.

The second set of determination equations are: determining whether the luminance value YRn and the chromaticity value CRn of the reference sample Rn satisfy the following equations to determine whether the reference sample Rn belongs to the group Gi (if all of the four equations below are satisfied, it is determined that the reference sample Rn belongs to the group Gi; that is, if any one of the equations is not satisfied, it is determined that the reference sample Rn does not belong to the group Gi): $YRn > Yi\_group\_max - Ymargin$; $YRn < Yi\_group\_min + Ymargin$; $CRn > Ci\_group\_max - Cmargin$; and $CRn < Ci\_group\_min + Cmargin$.

If the reference sample Rn does not fall within any one existing group, a new group is created and the reference sample Rn is assigned to the new group.

After all of the reference samples are grouped, associated linear models are respectively established for the groups.

A target group is selected from the groups according to the luminance value of the target pixel, and the chromaticity value of the target pixel is predicted by using a target linear model of the target group. For example, assuming that the luminance value of the target pixel falls between Yi_group_min and Yi_group_max, the group Gi is selected as the target group, and the chromaticity value of the target pixel is predicted by using the target linear model LMi of the target group Gi.

Examples are described below. Initially after the first reference sample is scanned, a first group G1 is established, wherein the first group G1 currently includes only the first reference sample.

Then, a second reference sample R2 is scanned, and it is determined according to one of the two sets of equations above whether the second reference sample R2 belongs to the first group G1.

If it is determined that the second reference sample R2 belongs to the first group G1, the second reference sample R2 is assigned to the first group G1, and Y1_group_min (selecting the smaller between the luminance value of the first reference sample and the luminance value of the second reference sample), Y1_group_max (selecting the larger between the luminance value of the first reference sample and the luminance value of the second reference sample), C1_group_min (selecting the smaller between the chromaticity value of the first reference sample and the chromaticity value of the second reference value), and C1_group_max (selecting the larger between the chromaticity value of the first reference sample and the chromaticity value of the second reference value) are accordingly updated.

Alternatively, if it is determined that the second reference sample R2 does not belong to the first group G1, a new second group G2 is established (similarly, the second group G2 currently includes only the second reference sample R2). The above process is repeated until all of the reference samples have been grouped.

That is, the grouping in FIG. 5 can be represented as: (1) establishing a first group according to a first reference sample, assigning the first reference sample to the first group, and generating a minimum luminance value, a maximum luminance value, a minimum chromaticity value and a maximum chromaticity value of the first group, wherein the minimum luminance value is a luminance value of the first reference sample, the maximum luminance value is a luminance value of the first reference sample, the minimum chromaticity value is a chromaticity value of the first reference value, and the maximum chromaticity value is a chromaticity value of the first reference sample; (2) determining according to a luminance value and a chromaticity value of a second reference value whether the second reference sample belongs to the first group, with associated details as described above; (3) if the second reference sample belongs to the first group, updating the minimum luminance value of the first group as a minimum value between the minimum luminance value of the first group and the luminance value of the second reference sample, updating the maximum luminance value of the first group as a maximum value between the maximum luminance value of the first group and the luminance value of the second reference sample, updating the minimum chromaticity value of the first group as a minimum value between the minimum chromaticity value of the first group and the chromaticity value of the second reference sample, and updating the maximum chromaticity value of the first group as a maximum value between the maximum chromaticity value of the first group and the chromaticity value of the second reference sample; (4) searching all established groups to determine whether the second reference sample belongs to any one of the groups; if the second reference sample does not belong to at least one of the groups, generating a second group, and generating a minimum luminance value, a maximum luminance value, a minimum chromaticity value and a maximum chromaticity value of the second group, wherein the minimum luminance value of the second group is the luminance value of the second reference sample, the maximum luminance value of the second group is the luminance value of the second reference sample, the minimum chromaticity value of the second group is the chromaticity value of the second reference sample, and the maximum chromaticity value of the second group is the chromaticity value of the second reference sample.

In other possible exemplary embodiments of the present application, the step of grouping the reference samples includes: (1) establishing a first group according to a first reference sample, assigning the first reference sample to the first group, and generating a minimum luminance value and a maximum luminance value of the first group, wherein the minimum luminance value of the first group is a luminance value of the first reference sample, and the maximum luminance value of the first group is the luminance value of the first reference sample; (2) determining according to a luminance value of a second reference sample whether the second reference sample belongs to the first group, wherein it is determined according to one of the two sets of equations below whether the second reference sample belongs to the first group (if any one set of equations are satisfied, the second reference sample is assigned to the first group): (A) the first set of determination equations: $YRn > Yi\_group\_min - Ymargin$; and $YRn < Yi\_group\_max + Ymargin$; and (B) the second set of determination equations: $YRn > Yi\_group\_max - Ymargin$; and $YRn < Yi\_group\_min + Ymargin$; (3) if the second reference sample belongs to the first group, updating the minimum luminance value of the first group as a minimum value between the minimum luminance value of the first group and the luminance value of the second reference sample, and updating the maximum luminance value of the first group as a maximum value between the maximum luminance value of the first group and the luminance value of the second reference sample; (4) searching the established groups to determine whether the second reference sample belongs to any one of the groups; if the second reference sample does not belong to at least one of the groups, generating a second group, and generating a minimum luminance value and a maximum luminance value of the second group.

In other possible exemplary embodiments of the present application, the step of grouping the reference samples includes: (1) establishing a first group according to a first reference sample, assigning the first reference sample to the first group, and generating a minimum chromaticity value and a maximum chromaticity value of the first group, wherein the minimum chromaticity value of the first group is a chromaticity value of the first reference sample, and the maximum chromaticity value of the first group is the chromaticity value of the first reference sample; (2) determining according to a chromaticity value of a second reference sample whether the second reference sample belongs to the first group, wherein it is determined according to the two sets of equations below whether the second reference sample belongs to the first group (if any one set of equations are satisfied, the second reference sample is assigned to the first group): (A) the first set of determination equations: $CRn > Ci\_group\_min - Cmargin$; and $CRn < Ci\_group\_max + Cmargin$; and (B) the second set of determination equations: $CRn > Ci\_group\_max - Cmargin$; and $CRn < Ci\_group\_min + Cmargin$; (3) if the second reference sample belongs to the first group, updating the minimum chromaticity value of the first group as a minimum value between the minimum chromaticity value of the first group and the chromaticity value of the second reference sample, and updating the maximum chromaticity value of the first group as a maximum value between the maximum chromaticity value of the first group and the chromaticity value of the second reference sample; (4) searching the established groups to determine whether the second reference sample belongs to any one of the groups; if the second reference sample does not belong to at least one of the groups, generating a second group, and generating a minimum chromaticity value and a maximum chromaticity value of the second group.

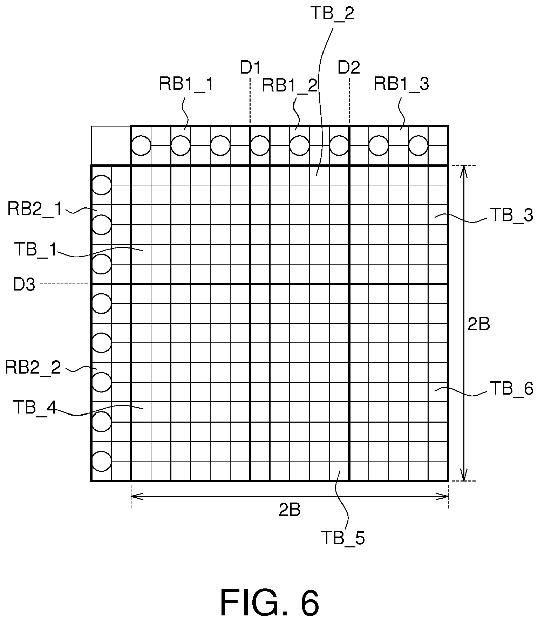

Further, in an embodiment of the present application, a reference block and a target block can be further segmented. FIG. 6 shows a schematic diagram of segmentation according to an exemplary embodiment of the disclosure. A reference sample is scanned along the X-axis and the Y-axis, and it is determined whether color discontinuity occurs, wherein the determination is performed according to: $|C\_R(i+1) - C\_Ri| > Cthreshold$ and/or $|Y\_R(i+1) - Y\_Ri| > Ythreshold$, wherein $C\_R(i+1)$ and $C\_Ri$ respectively represent the chromaticity value of the reference sample $R(i+1)$ and the chromaticity value of the reference sample $Ri$, $Y\_R(i+1)$ and $Y\_Ri$ respectively represent the luminance value of the reference sample $R(i+1)$ and the luminance value of the reference sample $R(i)$, and Cthreshold and Ythreshold respectively represent a chromaticity threshold (a predetermined value) and a luminance threshold (a predetermined value).

Further, in other exemplary embodiments of the present application, the step of grouping the reference samples can include: defining a quantity of the groups; establishing the groups of a fixed quantity, and calculating individual group characteristic values of the at least one group according to individual sample characteristic values of a plurality of reference samples included in the groups; and assigning the reference samples into the at least one group according to the individual sample characteristic values. The group characteristic value includes any combination of: a position, a representative luminance value, a representative chromaticity component value, a maximum luminance, a minimum luminance, a maximum chromaticity, a minimum chromaticity, and a reference sample quantity. The sample characteristic value includes any combination of: a luminance, at least one chromaticity component and a position.

After the spatial position of the color discontinuity is identified, the reference block and the target block are segmented. Taking FIG. 6 for example, after the color discontinuities D1 and D2 are identified, the reference block RB1 is segmented into reference sub-blocks RB1_1, RB1_2 and RB1_3. After the color discontinuity D3 is identified, the reference block RB2 is segmented into reference sub-blocks RB2_1 and RB2_2. Similarly, according to the color discontinuities D1 to D3, the target block TB is segmented into target sub-blocks TB_1, TB_2, TB_3, TB_4, TB_5 and TB_6. Then, the reference sub-blocks are grouped (with details of the grouping as described above), and corresponding models are established by using the grouped reference sub-blocks.

Alternatively, the reference sub-block RB1_1 and the reference sub-block RB2_1 are referred when the chromaticity value of the target sample of the target sub-block TB_1 is predicted, the reference sub-block RB1_2 and the reference sub-block RB2_1 are referred when the chromaticity value of the target sample of the target sub-block TB_2 is predicted, the reference sub-block RB1_3 and the reference sub-block RB2_1 are referred when the chromaticity value of the target sample of the target sub-block TB_3 is predicted, the reference sub-block RB1_1 and the reference sub-block RB2_2 are referred when the chromaticity value of the target sample of the target sub-block TB_4 is predicted, the reference sub-block RB1_2 and the reference sub-block RB2_2 are referred when the chromaticity value of the target sample of the target sub-block TB_5 is predicted, and the reference sub-block RB1_3 and the reference sub-block RB2_2 are referred when the chromaticity value of the target sample of the target sub-block TB_6 is predicted. Details for predicting the chromaticity value are as described previously, and are omitted herein. That is, when any one of the target sub-blocks is predicted, at least one of the reference sub-blocks is excluded.

A color discontinuity occurs, for example, when a white reference sample is adjacent to a black reference sample, or when a red reference sample is adjacent to a blue reference sample.

In the present application, a color discontinuity is identified so as to segment a reference block and a target block. When the chromaticity value of a target sub-block is predicted, a reference sub-block having a more similar color is taken into consideration, and a reference sub-block having a less similar color is eliminated. That is, taking FIG. 6 for example, the color of the target sub-block TB_1 is more similar to that of the reference sub-block RB1_1 but less similar to that of the reference sub-block RB1_2. Thus, to reconstruct the target sub-block TB_1, the reference sub-block RB1_1 is taken into consideration while the reference sub-block RB1_2 is excluded. Thus, the prediction result can be more accurate.

That is to say, in one exemplary embodiment of the present application, to perform segmentation, a spatial position having a characteristic value discontinuity (e.g., a color discontinuity) is identified, so as to segment the reference block and the target block, that is, the reference block is segmented into at least one reference sub-block, and a group is established for the at least one reference sub-block; and a model is established by using the at least one reference sub-block.

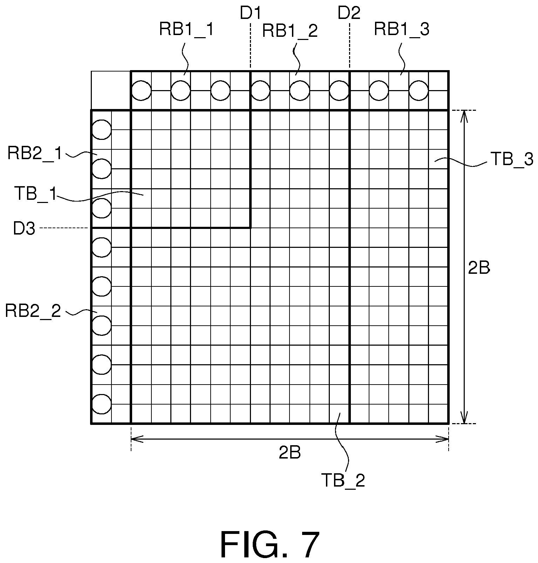

FIG. 7 shows a schematic diagram of segmentation according to another exemplary embodiment of the disclosure. After the color discontinuities D1 and D2 are identified, the reference block RB1 is segmented into reference sub-blocks RB1_1, RB1_2 and RB1_3; after the color discontinuity D3 is identified, the reference block RB2 is segmented into reference sub-blocks RB2_1 and RB2_2. Similarly, according to the color discontinuities, the target block TB is segmented into target sub-blocks TB_1, TB_2 and TB_3.

Next, the reference sub-block RB1_1 and the reference sub-block RB2_1 are referred when the chromaticity value of the target sample of the target block TB_1 is predicted, the reference sub-block RB1_2 and the reference sub-block RB2_2 are referred when the chromaticity value of the target sample of the target block TB_2 is predicted, and the reference sub-block RB1_3 is referred when the chromaticity value of the target sample of the target block TB_3 is predicted. Details for predicting the chromaticity value are as described previously, and are omitted herein.

Alternatively, in other exemplary embodiments of the present application, the step of predicting the chromaticity value of the target pixel includes: segmenting the target block into at least one target sub-block according to a spatial position of a characteristic value discontinuity, selecting the target group according to the target sub-block to which the target pixel belongs, and predicting the chromaticity value of the target pixel by using the model of the target group.

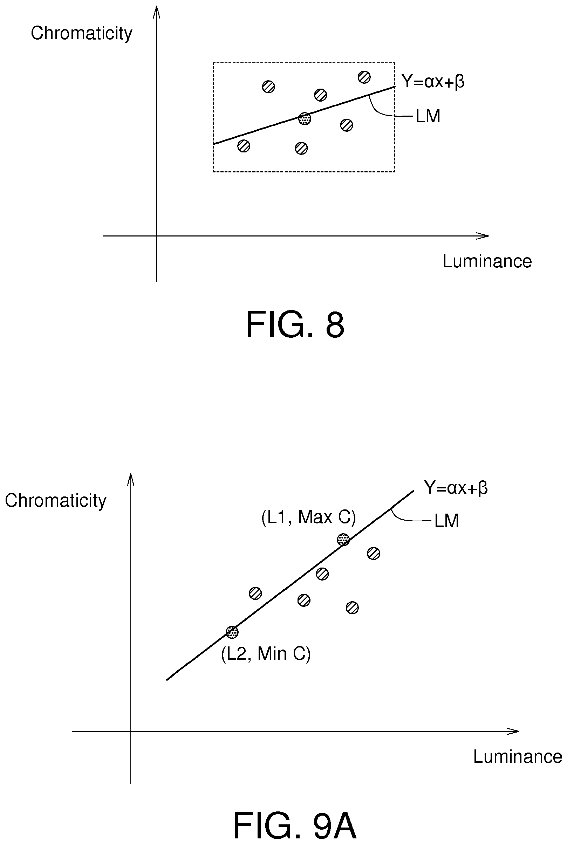

FIG. 8 shows a schematic diagram of establishing a linear model according to an exemplary embodiment of the disclosure. In FIG. 8, a linear model is established by applying a linear regression algorithm. Individual corresponding linear models are established for the groups. The linear model established can be represented as: $Y=\alpha x+\beta$, where Y represents the chromaticity value, x represents the luminance value, and $\alpha$ and $\beta$ are as shown below:

$$\alpha = \frac{N \cdot \sum\left(L(n) \cdot C(n)\right) - \sum L(n) \cdot \sum C(n)}{N \cdot \sum\left(L(n) \cdot L(n)\right) - \sum L(n) \cdot \sum L(n)}$$

$$\beta = \frac{\sum C(n) - \alpha \cdot \sum L(n)}{N}$$

In the above, N represents the quantity of reference samples in the group, L(n) and C(n) respectively represent the luminance value and the chromaticity value of the reference sample Rn.

Alternatively, another straight line equation is: $Y=\alpha x+\beta$, where $\alpha$ and $\beta$ are as shown below:

$$\alpha = \frac{Cmax - Cmin}{Lmax - Lmin},$$ and

$$\beta = Cmax - Lmax \cdot \frac{Cmax - Cmin}{Lmax - Lmin}.$$ In the above, Cmax, Cmin, Lmax and Lmin respectively represent the maximum chromaticity, the minimum chromaticity value, the minimum luminance value and the maximum luminance value of the reference samples.

FIG. 9A to FIG. 9C show schematic diagrams of establishing linear models according to an exemplary embodiment of the disclosure. In FIG. 9A to FIG. 9C, linear models are established by applying straight line equations. That is, two points (two reference samples) are identified from the reference samples to establish a straight line, and the established straight line is a linear model.

In FIG. 9A, the points identified are P1:(L1, Max C) and P2:(L2, Min C); that is, P1 represents a reference sample having a maximum chromaticity value among the reference samples in the group, and P2 represents a reference sample having a minimum chromaticity value among the reference samples in the group.

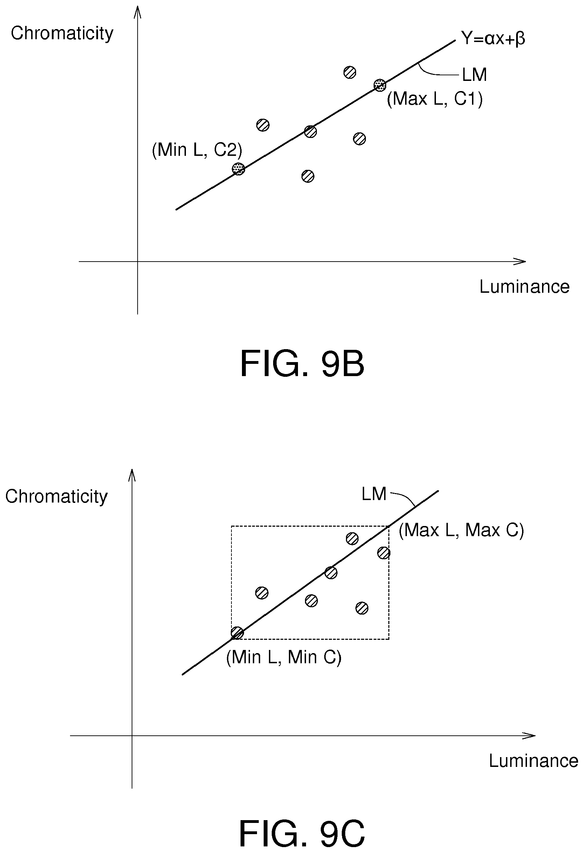

In FIG. 9B, the points identified are P1 :(Max L1, C1) and P2:(Min L, C2); that is, P1 represents a reference sample having a maximum luminance value among the reference samples in the group, and P2 represents a reference sample having a minimum luminance value among the reference samples in the group.

In FIG. 9C, the points identified are P1:(Max L1, Max C) and P2:(Min L, Min C); that is, P1 represents a reference sample having both a maximum luminance value and a maximum chromaticity value among the reference samples in the group, and P2 represents a reference sample having both a minimum luminance value and a minimum chromaticity value among the reference samples in the group.

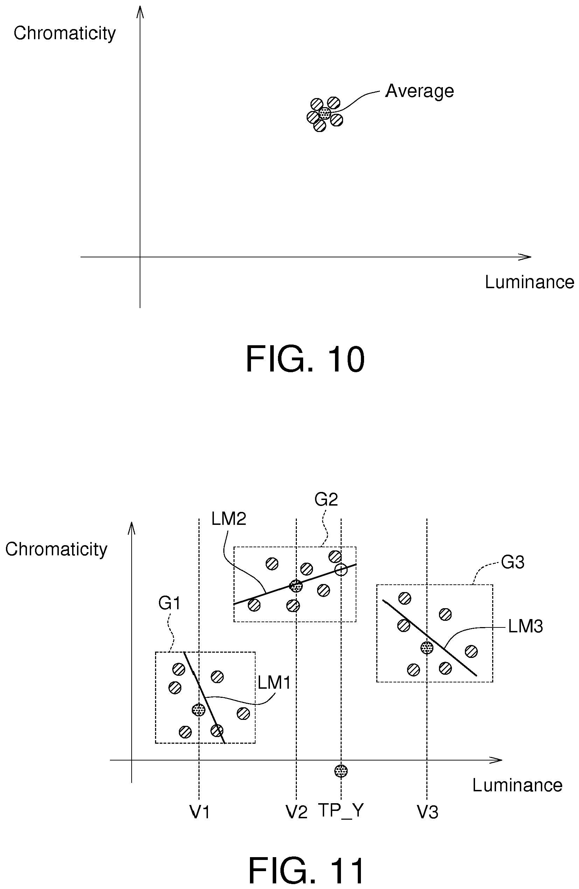

FIG. 10 shows a schematic diagram of establishing a linear model according to an exemplary embodiment of the disclosure. In FIG. 10, a linear model is established by applying an averaging algorithm. In the application scenario of FIG. 10, the luminance value distribution and/or chromaticity value distribution of the reference samples in the group are quite concentrated, or the group includes only one reference sample. When the averaging algorithm is applied, the predicted chrominance value of the target sample is an average value of the chromaticity values of the reference samples.

FIG. 11 shows a schematic diagram of predicting a chromaticity value according to an exemplary embodiment of the disclosure. In an exemplary embodiment of the present application, when the chromaticity value of the target pixel is predicted, a group nearest to the target pixel is identified according to the luminance value of the target pixel. Then, the chromaticity value of the target pixel is predicted by applying the linear model of the nearest group.

In other words, in FIG. 11, V1, V2 and V3 respectively present average luminance values of the groups G1, G2 and G3. The step of identifying a group nearest to the target pixel is: determining whether the luminance value TP_Y of the target pixel is nearest to V1, V2 or V3. If the luminance value TP_Y of the target pixel is nearest to V1, it is determined that the group G1 is nearest to the target pixel, and the chromaticity value TP_C of the target pixel is predicted by applying the linear model LM1 of the group G1. Similarly, if it is determined that the luminance value TP_Y of the target pixel is nearest to V2, it is determined that the group G2 is nearest to the target pixel, and the chromaticity value TP_C of the target pixel is predicted by applying the linear model LM2 of the group G2. If it is determined that the luminance value TP_Y of the target pixel is nearest to V3, it is determined that the group G3 is nearest to the target pixel, and the chromaticity value TP_C of the target pixel is predicted by applying the linear model LM3 of the group G3. In the example in FIG. 11, the luminance value TP_C of the target pixel is nearest to V2, and it is determined that the group G2 is nearest to the target pixel and the chromaticity value TP_C of the target pixel is predicted by applying the linear model LM2 of the group G2.

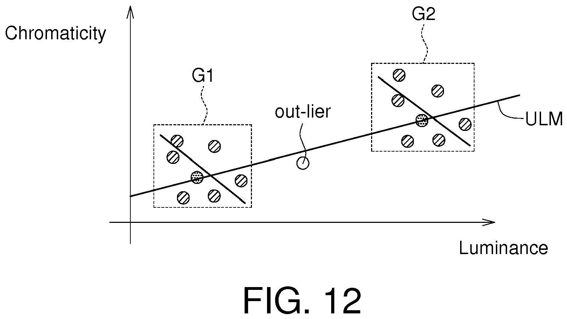

FIG. 12 shows a schematic diagram of predicting a chromaticity value according to an exemplary embodiment of the disclosure. The target pixel is regarded as an out-lier. In an exemplary embodiment of the present application, if a target pixel does not fall within a range of any group, the target pixel is regarded as an out-lier. In one exemplary embodiment of the disclosure, there are three approaches for predicting the chromaticity value of a target pixel regarded as an out-lier.

In the first approach, the chromaticity value is predicted by using a universal linear model (ULM). The "universal correlation model" and/or "universal linear model" is obtained according to individual center points of all of the groups.

In the second approach, an average value of predicted adjacent chromaticity values is used as the predicted chromaticity value of the target pixel regarded as an out-lier. The term "a predicated adjacent chromaticity value" refers to a predetermined chrominance of the remaining target pixels having similarly luminance values.

In the third approach, an intermediate grayscale value is used as the predicted chromaticity value of the target pixel regarded as an out-lier. For example, assuming that the pixel value is 10-bit, 512 is used as the predicted chromaticity value of the target pixel regarded as an out-lier.

Further, in one exemplary embodiment of the present application, if a chromaticity value of a target pixel previously processed is near the lum inance value of the target pixel, the (predicted) chromaticity value of the target pixel previously processed is used as the predicted chromaticity value of the target pixel.

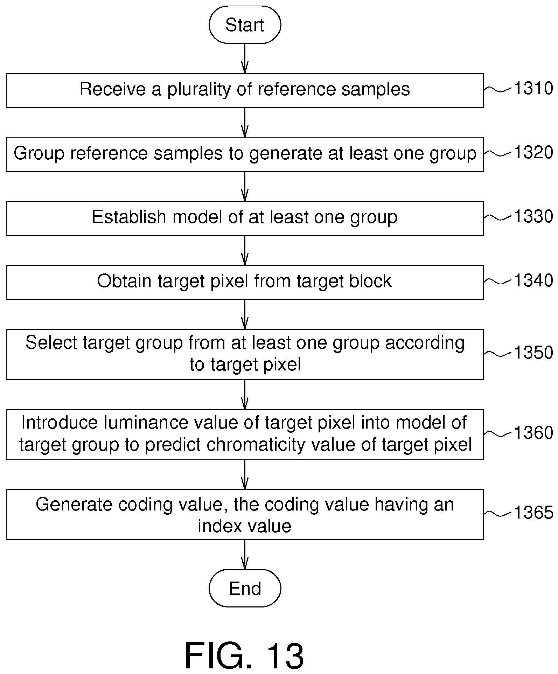

FIG. 13 shows a flowchart of a video encoding method according to an exemplary embodiment of the disclosure. As shown in FIG. 13, in step 1310, a plurality of reference samples are collected. In step 1320, the reference samples are grouped to generate at least one group. In step 1330, a model of the at least one group is established. In step 1340, a target pixel is obtained from a target block. In step 1350, a target group is selected from the at least one group according to the target pixel. In step 1360, a luminance value of the target pixel is introduced into a model of the target group to predict a chromaticity value of the target pixel. In step 1365, a coding value is generated, wherein the coding value includes an index value.

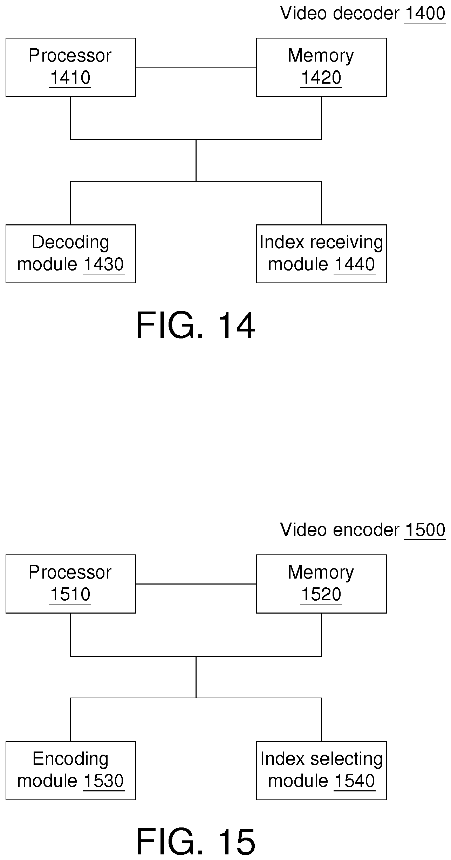

FIG. 14 shows a function block diagram of a video decoder according to an exemplary embodiment of the disclosure. The video decoder 1400 according to an exemplary embodiment of the disclosure includes a processor 1410, a memory 1420, a decoding module 1430 and an index receiving module 1440. The processor 1410, the memory 1420, the decoding module 1430 and the index receiving module 1440 are coupled to one another. The processor 1410 is for controlling the video decoder 1400. The memory 1420 is for storing a reference block and a target block. The decoding module 1430 can perform the video decoding method above, and the index receiving module 1440 receives an index value from the video encoder. The decoding module 140 and the index receiving module 1440 can be implemented by software executed by a processor, or be implemented by hardware circuits.

FIG. 15 shows a function block diagram of a video encoder according to an exemplary embodiment of the disclosure. The video encoder 1500 according to an exemplary embodiment of the disclosure includes a processor 1510, a memory 1520, an encoding module 1530 and an index selecting module 1540. The processor 1510, the memory 1520, the encoding module 1530 and the index selecting module 1540 are coupled to one another. The processor 1510 is for controlling the video encoder 1500. The memory 1520 is for storing a reference block and a target block. The encoding module 1530 can perform the video encoding method described above. The index selecting module 1540 generates an index value from a coding value generated by the coding module 1530. The encoding module 1530 and the index selecting module 1540 can be implemented by software executed a processor, or be implemented by hardware circuits.

As described above, the exemplary embodiments of the present application effectively predict a chromaticity value. Thus, when video data in a YCbCr format is encoded, only Y data needs to be encoded, hence effectively reducing the bitrate of encoding. On the other hand, CbCr data can be predicted by using the above method. The exemplary embodiments of the present application are capable of solving the issue of poor efficiency of independently encoding a chromaticity value and enhancing the overall encoding efficiency. Therefore, the present application can be applied to products involving video compression related technologies, for example but not limited to, webcams, digital cameras, digital video cameras, handheld mobile devices and digital televisions.

**Claims**

1. A video decoding method, comprising:
   receiving (105) a coding value, and performing steps below according to an index value of the coding value:

   collecting (110) a plurality of reference samples;
   grouping (120) the reference samples to generate at least one group;
   establishing (130) a model of the at least one group;
   obtaining (140) a target pixel from a target block;
   selecting (150) a target group from the at least one group according to the target pixel; and
   introducing (160) a luminance value of the target pixel into a model of the target group to predict a chromaticity value of the target pixel.

2. The video decoding method according to claim 1, wherein a quantity of the groups generated is one or any number more than two.

3. The video decoding method according to claim 1 or 2, wherein the step of grouping the reference samples comprises:

   calculating an average luminance value of the reference samples; and
   assigning, according to whether respective luminance values of the reference samples are greater than or smaller than the average luminance value, the reference samples into the at least one generated group.

4. The video decoding method according to any of claims 1 to 3, wherein the step of grouping the reference samples comprises:

   establishing a first group according to a first reference sample of the reference samples, and assigning the first reference sample into the first group;
   determining, according to a sample characteristic value of a second reference sample of the reference samples, whether to add the second reference sample into the first group;
   if it is determined to add the second reference sample into the first group, updating a group characteristic value of the first group; and
   if it is determined not to add the second reference sample into the first group, establishing a second group and calculating a group characteristic value of the second group.

5. The video decoding method according to any of claims 1 to 4, wherein the step of grouping the reference samples comprises:

   defining a quantity of the at least one group;
   establishing the at least one group of a fixed quantity, and calculating individual group characteristic values of the at least one group according to individual sample characteristic values of a plurality of reference samples of the at least one group; and
   assigning the reference samples into the at least one group according to the individual sample characteristic values.

6. The video decoding method according to claims 4 or 5, wherein the group characteristic value comprises any combination of: a position, a representative luminance value, a representative chromaticity component value, a maximum luminance, a minimum luminance, a maximum chromaticity, a minimum chromaticity and a reference sample quantity; and the sample characteristic value comprises any combination of: a luminance, at least one chromaticity component and a position.

7. The video decoding method according to any of claims 1 to 6, wherein the step of establishing the model of the at least one group comprises:
   establishing the model by applying a linear regression algorithm, a straight line equation or an averaging algorithm.

8. The video decoding method according to any of claims 1 to 7, wherein the step of selecting the target group from the at least one group comprises:
   identifying from the at least one group the target group nearest to the target pixel according to the luminance value of the target pixel.

9. The video decoding method according to any of claims 1 to 8, wherein, if a luminance value of a previously processed target pixel is near the luminance value of the target pixel, the chromaticity value of the target pixel is predicted by using a predicted chromaticity value of the previously processed target pixel.

10. The video decoding method according to any of claims 1 to 9, wherein:

    a spatial position of a characteristic value discontinuity is identified to segment a reference block and the target block, wherein the reference block is segmented into at least one reference sub-block, and a group is established for the at least one reference sub-block; and
at least one model is established by using the at least one reference sub-block;
the step of predicting the chromaticity value of the target pixel comprises:

segmenting the target block into at least one target sub-block according to a spatial position of a characteristic value discontinuity;
selecting the target group according to the target sub-block to which the target pixel belongs; and
predicting the chromaticity value of the target pixel by using the model of the target group.

11. A video encoding method, comprising:

collecting (1310) a plurality of reference samples;
grouping (1320) the reference samples to generate at least one group;
establishing (1330) a model of the at least one group;
obtaining (1340) a target pixel from a target block;
selecting (1350) a target group from the at least one group according to the target pixel;
introducing (1360) a luminance value of the target pixel into a model of the target group to predict a chromaticity value of the target pixel; and
generating (1365) a coding value, the coding value having an index value.

12. The video encoding method according to claim 11, wherein a quantity of the groups generated is one or any number more than two.

13. The video encoding method according to claim 11 or 12, wherein the step of grouping the reference samples comprises:

calculating an average luminance value of the reference samples; and
assigning, according to whether respective luminance values of the reference samples are greater than or smaller than the average luminance value, the reference samples into the at least one generated group.

14. The video encoding method according to any of claims 11 to 13, wherein the step of grouping the reference samples comprises:

establishing a first group according to a first reference sample of the reference samples, and assigning the first reference sample into the first group;

determining, according to a sample characteristic value of a second reference sample of the reference samples, whether to add the second reference sample into the first group;
if it is determined to add the second reference sample into the first group, updating a group characteristic value of the first group; and
if it is determined not to add the second reference sample into the first group, establishing a second group and calculating a group characteristic value of the second group.

15. The video encoding method according to any of claims 11 to 14, wherein the step of grouping the reference samples comprises:

defining a quantity of the at least one group;
establishing the at least one group of a fixed quantity, and calculating individual group characteristic values of the at least one group according to individual sample characteristic values of a plurality of reference samples of the at least one group; and
assigning the reference samples into the at least one group according to the individual sample characteristic values.

16. The video encoding method according to claims 14 or 15, wherein the group characteristic value comprises any combination of: a position, a representative luminance value, a representative chromaticity component value, a maximum luminance, a minimum luminance, a maximum chromaticity, a minimum chromaticity and a reference sample quantity; and the sample characteristic value comprises any combination of: a luminance, at least one chromaticity component and a position.

17. The video encoding method according to any of claims 11 to 16, wherein the step of establishing the model of the at least one group comprises:
establishing the model by applying a linear regression algorithm, a straight line equation or an averaging algorithm.

18. The video encoding method according to any of claims 11 to 17, wherein the step of selecting the target group from the at least one group comprises:
identifying from the at least one group the target group nearest to the target pixel according to the luminance value of the target pixel.

19. The video encoding method according to any of claims 11 to 18, wherein, if a luminance value of a previously processed target pixel is near the luminance value of the target pixel, the chromaticity value of the target pixel is predicted by using a predicted chromaticity value of the previously processed target pixel.

**20.** The video encoding method according to any of claims 11 to 19, wherein:

a spatial position of a characteristic value discontinuity is identified to segment a reference block and the target block, wherein the reference block is segmented into at least one reference sub-block, and a group is established for the at least one reference sub-block; and
at least one model is established by using the at least one reference sub-block;
the step of predicting the chromaticity value of the target pixel comprises:

segmenting the target block into at least one target sub-block according to a spatial position of a characteristic value discontinuity;
selecting the target group according to the target sub-block to which the target pixel belongs; and
predicting the chromaticity value of the target pixel by using the model of the target group.

**21.** A video decoder (1400), comprising:

a processor (1410), for controlling the video decoder;
a memory (1420), for storing a plurality of reference samples and a target block;
a decoding module (1430); and
an index receiving module (1440), receiving a coding value;
wherein, the processor, the memory, the decoding module and the index receiving module are coupled to one another; and the decoding module performs operations below according to an index value of the coding value:

collecting a plurality of reference samples;
grouping the reference samples to generate at least one group;
establishing a model of the at least one group;
obtaining a target pixel from a target block;
selecting a target group from the at least one group according to the target pixel; and
introducing a luminance value of the target pixel into a model of the target group to predict a chromaticity value of the target pixel.

**22.** A video encoder (1500), comprising:

a processor (1510), for controlling the video encoder;
a memory (1520), for storing a plurality of reference samples and a target block;
an encoding module (1530); and
an index selecting module (1540);
wherein, the processor, the memory, the encoding module and the index selecting module are coupled to one another; and the encoding module performs operations below:

collecting a plurality of reference samples;
grouping the reference samples to generate at least one group;
establishing a model of the at least one group;
obtaining a target pixel from a target block;
selecting a target group from the at least one group according to the target pixel;
introducing a luminance value of the target pixel into a model of the target group to predict a chromaticity value of the target pixel; and
generating a coding value; and

the index selecting module generates an index value from the coding value generated by the encoding module.

Start

Receive coding value, and perform following steps according to index value of coding value — 105

Collect plurality of reference samples — 110

Group reference samples to generate at least one group — 120

Establish model of at least one group — 130

Obtain target pixel from target block — 140

Select target group from at least one group according to target pixel — 150

Introduce luminance value of target pixel into model of target group to predict chromaticity value of target pixel — 160

End

# FIG. 1

FIG. 2A

FIG. 2B

FIG. 2C

FIG. 3

FIG. 4

FIG. 5

FIG. 6

FIG. 7

FIG. 8

FIG. 9A

FIG. 9B

FIG. 9C

## FIG. 10

## FIG. 11

FIG. 12

Start

Receive a plurality of reference samples ⌐∽1310

Group reference samples to generate at least one group ⌐∽1320

Establish model of at least one group ⌐∽1330

Obtain target pixel from target block ⌐∽1340

Select target group from at least one group according to target pixel ⌐∽1350

Introduce luminance value of target pixel into model of target group to predict chromaticity value of target pixel ⌐∽1360

Generate coding value, the coding value having an index value ⌐∽1365

End

# FIG. 13

Video decoder 1400

| Processor 1410 | | Memory 1420 |

| Decoding module 1430 | | Index receiving module 1440 |

# FIG. 14

Video encoder 1500

| Processor 1510 | | Memory 1520 |

| Encoding module 1530 | | Index selecting module 1540 |

# FIG. 15

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VAN DER AUWERA G ET AL: "Description of Core Experiment 3 (CE3): Intra Prediction and Mode Coding", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J1023-v2, 13 May 2018 (2018-05-13), XP030151317, * page 29, paragraph 8.1.2 * ----- | 1-22 | INV. H04N19/593 H04N19/186 |
| X | US 2018/077426 A1 (ZHANG KAI [US] ET AL) 15 March 2018 (2018-03-15) * paragraphs [0133] - [0157] * * figures 7A-7E * ----- | 1-22 | |

TECHNICAL FIELDS
SEARCHED    (IPC)

H04N

The present search report has been drawn up for all claims

| Place of search | Date of completion of the search | Examiner |
|---|---|---|
| Munich | 29 July 2019 | Di Cagno, Gianluca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 19 18 2846

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2019

| Patent document cited in search report | Publication date | Patent family member(s) | Publication date |
|---|---|---|---|
| US 2018077426 A1 | 15-03-2018 | BR 112019004544 A2 | 28-05-2019 |
| | | CN 109716771 A | 03-05-2019 |
| | | EP 3513559 A1 | 24-07-2019 |
| | | KR 20190046852 A | 07-05-2019 |
| | | SG 11201900967X A | 29-04-2019 |
| | | TW 201817236 A | 01-05-2018 |
| | | US 2018077426 A1 | 15-03-2018 |
| | | WO 2018053293 A1 | 22-03-2018 |

EPO FORM P0459

For more details about this annex : see Official Journal of the European Patent Office, No. 12/82